# EUROPEAN PATENT APPLICATION

(11) **EP 4 109 189 A1**
(43) Date of publication of application: **28.12.2022**
(21) Application number: 21181104.7
(22) Date of filing: 23.06.2021
(51) Int. Cl.: G05B 23/02, H04L 12/26

(54) **METHOD FOR SELECTING A TIME-SERIES DATA STREAM IN A PRODUCTION PLANT**

(71) Applicant: Covestro Deutschland AG, 51373 Leverkusen (DE)
(72) Inventor: FRENZEL, Philipp, 46236 Bottrop (DE); Arroyo Esquivel, Esteban, 50667 Köln (DE)
(74) Representative: Levpat

(57) **Abstract**

The invention relates to a method for selecting a time-series data stream (4a-c) in a production plant, wherein a plurality of time-series data streams (4a-c) from respectively different data sources (5a-c) describe a production process variable (2) of a production process in the production plant, wherein for each time-series data stream (4a-c) from the plurality of time-series data streams (4a-c) a quality metric for describing the accuracy of the respective time-series data stream (4a-c) is determined, wherein each quality metric is determined based either on a numeric behavior test of the respective time-series data stream (4a-c) or based on system context information of the respective data source (5a-c), wherein from the plurality of time-series data streams (4a-c) a time-series data stream(4a-c) is selected based on the respective quality metric determined for each time-series data stream (4a-c).

## Description

The invention is directed at a method for selecting a time-series data stream in a production plant.

The control of production processes in production plant relies on data describing and monitoring the production process. Such data is generally presented in the form of a time-series data stream from a particular data source. In order to have safeguard mechanisms in the control of the production process, different data sources which also may have redundancy are employed. In this way, either the complete failure of a particular data source, such as a sensor, or incorrect or compromised data from that data source may be compensated. However, the question remains which data sources to trust under what circumstances. For some processes, it is imperative to shut them down before a critical situation in terms of the physics or the chemistry of the production process is reached. On the other hand, such a shutdown and subsequent restart may be very time consuming and costly. Therefore, any premature or unwarranted shutdown should be avoided for economic reasons. Even when the consequences of having to rely on uncertain data are not as severe, it remains important to be able to identify more reliable data sources over less reliable ones at any given time.

Consequently, the object of the invention is to provide a method for a more accurate determination which time-series data stream from which respective data source is more reliable than the others.

With respect to a method for selecting a time-series data stream in a production plant, the object of the invention is achieved through the features of claim 1.

The invention is based on the recognition that the most reliable data source in the production plant may be selected by relying on a combination of a numerical behavior test, which analyzes the values of the time-data stream as such, i.e. as numbers, and system context information, which may provide additional information with respect to the data source that is external to the values of the time-data stream as such.

The method according to the invention is for selecting a time-series data stream in a production plant. Such a production plant may in principle any kind of facility in which a production process occurs. In particular, the production plant may be a chemical production plant in which the production process is a chemical production process or comprises a chemical production process. It may also be that the production plant is a physical production plant in which the production process is a physical production process or comprises a physical production process. In the method according to the invention, a plurality of time-series data streams from respectively different data sources describe a production process variable of a production process in the production plant. A time-series data stream is a sequence of values corresponding to the course of a process parameter - namely the production process variable - over time. The process parameter relates to the production process. Examples for such process parameters include pressure, temperature, weight, a ratio of a component in a substance, voltage, current, signal level, frequency, energy, volumetric flow rate, mass flow rate and so forth.

Further in the method according to the invention, for each time-series data stream from the plurality of time-series data streams a respective quality metric for describing the accuracy of the respective time-series data stream is determined, wherein each quality metric is determined based either on a numeric behavior test of the respective time-series data stream or based on system context information of the respective data source. The quality metric may be given as a number, for which e.g. a higher value corresponds to a higher quality, or as a Boolean or binary value, which may assume a 'true' or a 'false' value. Here 'true' may correspond to positively established accuracy of the respective time-series data stream and 'false' to an established lack of accuracy of the respective time-series data stream. The quality metric may also be given as a color code.

In the method according to the invention, a time-series data stream is selected from the plurality of time-series data streams based on the respective quality metric determined for each time-series data stream. In principle, the selection of the time-series data stream may depend on the quality metric in an arbitrary manner. For example, the particular time-series data stream from the plurality of time-series data streams with the highest value of the quality metric may be selected. In particular, a single time-series data stream is selected.

In the method according to the invention, it may be that there is only a single production process variable of the production process for which a time-series data stream is selected from a plurality of time-series data streams for that production process variable. In contrast, it may also be that there are a plurality of production process variables in the production process for each of which such a selection from among a respective plurality of time-series data streams is made. Accordingly, a preferred embodiment of the invention is characterized in that a series of respective pluralities of time-series data streams from respectively different data sources describe a respective production process variable of the production process in the production plant, wherein for each time-series data stream from each plurality of time-series data streams of the series a respective quality metric for describing the accuracy of the respective time-series data stream is determined, wherein each quality metric is determined based either on a numeric behavior test of the respective time-series data stream or based on system context information of the respective data source, wherein from the plurality of time-series data streams a respective time-series data stream is selected for each plurality of time-series data streams of the series based on the respective quality metric determined for each time-series data stream.

In principle, the numeric behavior test may be any kind of test that is based on the values of the time-series data stream. According to a preferred embodiment of the invention, at least for some time-series data streams, preferably for all time-series data streams, the numeric behavior test comprises a freezing test to determine whether the deviation of the time-series data stream exceeds a pre-determined minimal deviation threshold. This is based on the reasoning that if the deviation becomes unusually small, it is very likely that the corresponding data source either froze or has some other malfunction. The deviation here may be the absolute deviation in the mathematical sense. Preferably, the determination occurs within a predetermined length of time.

It is further preferred that at least for some time-series data streams, preferably for all time-series data streams, the numeric behavior test comprises a drifting test to determine whether a change of the average value of the time-series data stream exceeds a pre-determined drift threshold. Such a drift may also be indicative of a problem in the data source.

According to a further preferred embodiment of the invention, at least for some time-series data streams, preferably for all time-series data streams, the numeric behavior test comprises an out of range values test to determine whether the values of the time-series data stream remain within a defined span. Preferably, this determination occurs within a predetermined length of time.

In particular, it may be that at least for some time-series data streams, preferably for all time-series data streams, the numeric behavior test comprises identifying each value of the time-series data stream as normal or abnormal based on an anomaly detection algorithm. Such an anomaly may be distinguished from an outlier in that a series of values may all be within the defined span, but that individual values differ from neighboring values so much that they imply a discontinuity. In particular, there may be a larger value jump in one direction with a subsequent return jump. The anomaly detection algorithm may be configured to detect discontinuities. In other words, a single value or a number of values may be irregular with respect to the values in its temporal vicinity, even though it or they are fundamentally within the span of permitted values. In principle, such an anomaly may be detected according to any appropriate criterion. It is preferred that the anomaly detection algorithm comprises an isolation forest anomaly detection algorithm.

A preferred embodiment of the invention is characterized in that at least for some time-series data streams, preferably for all time-series data streams, the numeric behavior test comprises a noise variation test to determine whether a deviation of a current measured noise of the time series-data stream from a previous measured noise of the time series-data stream exceeds a pre-determined noise deviation threshold. In other words, an increase in noise in the values of the time series-data stream may be indicative of problems with the data source.

In principle, the data source may be any kind of device that generates data. A further preferred embodiment of the invention is characterized in that at least one data source is a sensor device observing the production process variable. In other words, in such a case the respective time-series data-stream corresponds to measurements of the sensor device. Preferably, a majority of the respective data sources of the plurality of time-series data streams are a respective sensor device observing the production process variable. It may also be that all of the respective data sources of the plurality of time-series data streams are a respective sensor device observing the production process variable.

According to a preferred embodiment of the invention, at least one data source is a computer model of the production process variable. In such a case, the time-series data stream does not correspond to a measurement of the production process variable but rather to a software that models at least a part of the production process and thereby generates the production process variable based on that modeling. It may be that the production process variable is generated only based on the computer model. However, it may also be that the computer model of the production process variable does depend on other process quantities that are provided to the computer model, preferably in real-time. Thus, the production process variable generated by the computer model may also be partially based on actual real-time measurements. Such a computer model based on and provided with real-time measurements from the production process may be called an online computer model. It is preferred that the computer model is an online computer model. It may also be that more than one data source is a computer model of the production process variable. Preferably, the computer model is based on a machine learning model of the production process variable. It may also be that the computer model is based on a model derived according to first principles. These first principles correspond to formulaic expressions of the underlying phenomenon. Such a computer model may also be described as a computer simulation of the production process variable. In other words, such a computer simulation is based on analytic formulas describing the physical or chemical processes underlying the determination of the production process variable. In particular, the computer model may be accessible via a communications network. It may also be that the computer model is running on a cloud service.

It may be that each quality metric or at least some quality metrics are determined only based either on the numeric behavior test or on the system context information. According to a further preferred embodiment of the invention, each quality metric is determined based on the numeric behavior test and on the system context information. Thus, for each quality metric both types of information would factor in.

A preferred embodiment of the invention is characterized in that at least for some time-series data streams, preferably for all time-series data streams, the system context information comprises a running state of the production process, in particular a running state of the respective data source. For example, a data source that is in a limited operation running state or in an emergency operation running state may be considered to be less reliable than a data source that is in a full operation running state or in a normal operation running state.

A further preferred embodiment of the invention is characterized in that at least for some time-series data streams, preferably for all time-series data streams, the system context information comprises system messages of the production process. Such system messages may be status messages relating to the production process and in particular system messages of the data source. Such status messages may comprise error messages. Thus, the presence of such error messages or the number or urgency of such error messages exceeding a threshold may indicate that the data source has a malfunction, thereby

According to a preferred embodiment of the invention, at least for some time-series data streams, preferably for all time-series data streams, the system context information comprises metadata describing a data accuracy, in particular a measurement accuracy, of the data source. This may for example be a device specification of a sensor that indicates measurement accuracy.

According to a further preferred embodiment of the invention, at least for some time-series data streams, preferably for all time-series data streams, the system context information comprises historical data describing the accuracy of the data source for previous measurements. In other words, such context information may indicate how accurate this data source has been in the past.

Alternatively or in addition, at least for some time-series data streams, preferably for all time-series data streams, the system context information may be based on data input by at least one user. The system context information may also comprise the data input by at least one user. Such data input by at least one user may have been entered for or during previous measurements. It may describe the accuracy of the data source for that previous measurement. Thus, such system context information may be based on data input by at least user and at the same comprise historical data describing the accuracy of the data source for previous measurements.

According to a further preferred embodiment of the invention, a functional location id is associated with each data source and the system context information is retrieved based on the functional location id. Preferably, at least for some time-series data streams, preferably for all time-series data streams, each system context information is associated with a respective functional location id. Consequently, the functional location id may serve as the key for the retrieval of the system context information. Such a functional location id may be configured to uniquely identify a respective data source.

A preferred embodiment of the invention is characterized in that determining the quality metric and selecting the time-series data stream is performed periodically, preferably with a time resolution of less than 10 seconds and in particular of less than 2 seconds or less than 1 second. In other words, the period time is less than 10 seconds and in particular less than 2 seconds or less than 1 second.

It may be that for some or for all of the time-series data streams of the plurality of time-series data streams, the quality metric is based only on a respective single numeric behavior test. According to a further preferred embodiment of the invention, for a subset of time-series data streams of the plurality of time-series data streams the quality metric is based on a plurality of numeric behavior tests. This plurality of numeric behavior tests may be combined in an arbitrary way, including with any system context information, to arrive at the quality metric. It is further preferred that the quality metric is determined based on a numerical weighing of each numeric behavior test of the plurality of numeric behavior tests to arrive at a combined numeric quality metric score.

In principle, the system context information may comprise information of any kind, including continuous values and discrete values. A preferred embodiment of the invention is characterized in that at least for some time-series data streams, preferably for all time-series data streams, the system context information comprises at least one Boolean variable. Preferably, at least for some time-series data streams, preferably for all time-series data streams, the system context information comprises at least one Boolean variable for indicating a reliability of the respective data source.

It may be that for some or all of the time-series data streams of the plurality of time-series data streams the quality metric is based on a single system context information, e.g. a single Boolean variable. A further preferred embodiment of the invention is characterized in that for a subset of time-series data streams of the plurality of time-series data streams the quality metric is based on a plurality of system context information. This plurality of system context information may then be combined, in principle, in an arbitrary way, to determine the quality metric. Preferably, the quality metric is determined based on a Boolean operation of each system context information of the plurality of system context information.

Once the time-series data stream is selected, that selected time-series data stream may be used for any purpose. It may be used for setting a process parameter in the production plant. According to a preferred embodiment of the invention, based on the selected time-series data stream a process parameter of the production process is modified. It may also be that based on the selected time-series data stream the production process is stopped. This may in particular happen if the values of the selected time-series data stream fulfill the conditions for an emergency stop. In other words, the selected time-series data stream may form the basis for deciding on an emergency stop.

Further advantageous and preferred features are discussed in the following description with respect to the Figures. In the following it is shown in
- Fig. 1: a schematic view of a production process in a process plant for which an embodiment of the invention is carried out and
- Fig. 2: a schematic view of a plurality of time-series data streams describing the production process of Fig. 1 from which a time-series data stream is selected according to an embodiment of the invention.

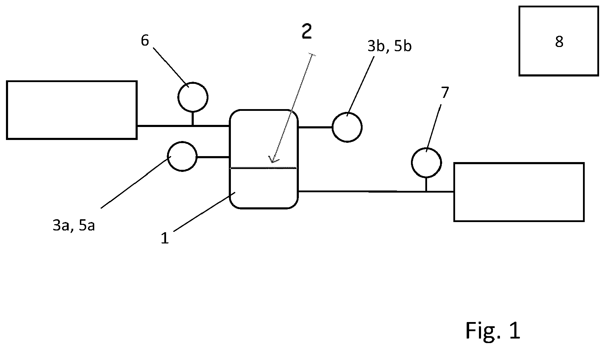

A process vessel 1 for a chemical production process in a production plant is shown in Fig. 1. The process vessel 1 is filled with a fluid for the chemical production process. In the present case, the filling level of the fluid in the process vessel 1 is to be monitored. In case the filling level, which here presents a production process variable 2, exceeds an upper threshold or falls below a lower threshold, for safety reasons the production plant as a whole, including the particular chemical production process, is to be shut down.

There is a first vessel level sensor, which presents a first sensor device 3a, as well as a second vessel level sensor, which presents a second sensor device 3b. These sensor devices 3a, 3b independently monitor the filling level of the process vessel 1 and accordingly produce a respective first time-series data stream 4a from the first sensor device 3a and second time-series data stream 4b from the second sensor device 3b which describe the filling level of the process vessel 1. Thereby, the first sensor device 3a and the second sensor device 3b each present a respective data source 5a, b for the filling level of the process vessel 1.

There is also an inlet flow sensor 6 measuring the rate of inlet flow into the process vessel 1 and an outlet flow sensor 7 measuring the rate of outlet flow from the process vessel 1. However, these two sensors - inlet flow sensor 6 and outlet flow sensor 7 - do not themselves measure the same production process variable 2 as the first sensor device 3a and the second sensor device 3b.

In addition, there is a modeling software for the entire production plant, which in particular presents an online computer model 8 of the filling level of the process vessel 1. This computer model 8 is therefore also a data source 5c producing a third time-series data stream 4c. The computer model 8 is a computer simulation currently running online on cloud computing services. It is provided with measurement data from the ongoing chemical production process.

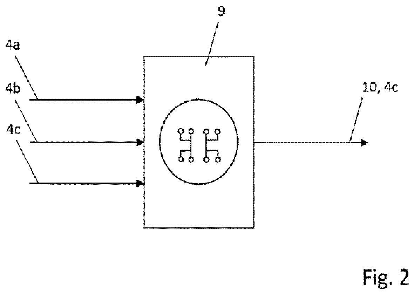

Fig. 2 shows an algorithm 9 for determining a quality metric for each time-series data stream 4a-c and for selecting a time-series data stream 4a-c among these. This algorithm 9 is employed as described in the following. Whichever time-series data stream 4a-c is selected may be denoted as the selected time-series data stream 10.

In an operation of the process vessel 1, it happens that the outlet flow sensor 7 is out of operation because of maintenance. At the same time, the inlet flow sensor 6 shows a normal amount of inlet flow. The first time-series data stream 4a of the first sensor device 3a shows a rise in the filling level of the process vessel 1 over time, which rise approaches a critical level at which point an emergency shutdown is necessary. Concurrently, the second time-series data stream 4b of the second sensor device 3b, which is redundant to the first sensor device 3a, shows a filling level which is steady at a level well below the critical level. The third time-series data stream 4c of the computer model 8 substantially corroborates the rise in the filling level of the process vessel 1 of the first time-series data stream 4a of the first sensor device 3a.

The algorithm 9 performs a numeric behavior test, comprising different specific evaluations, on the first time-series data stream 4a and finds that its deviation is below the pre-determined minimal deviation threshold. This is understood to be indicative of a freezing of the corresponding data source 5a, namely the first sensor device 3a. The algorithm 9 also analyzes system context information of the first sensor device 3a. That system context information does not show any irregularities. Substantially based on the indication of freezing, the algorithm 9 assigns a low number Q1 as a quality metric to the first time-series data stream 4a.

The corresponding numeric behavior test is performed by the algorithm 9 on the second time-series data stream 4b and does not indicate any shortcomings of the second time-series data stream 4b. However, system context information for the second sensor device 3b shows that it had previous malfunctions resulting measurement inaccuracies. As a result, the algorithm 9 assigns a medium number Q2 as a quality metric to the second time-series data stream 4b.

For the third time-series data stream 4c also the numeric behavior test is performed by the algorithm 9 and does not find any problems. The system context information for the computer model 8 finds that the computer model 8 has had a high accuracy in predicting the filling level of the process vessel 1. Consequently, the algorithm 9 assigns a high number Q3 as quality metric to the third time-series data stream 4c.

Based on these assigned quality metrics, the algorithm 9 selects the third time-series data stream 4c from the computer model 8. Thus, the third time-series data stream 4c becomes the selected time-series data stream 10. Because the third time-series data stream 4c indicates a rise in the filling level that approaches a critical value, the production process is stopped in an emergency reaction.

Later, it turned out that indeed the first sensor device 3a had frozen its measurements. The rise in the filling level was real and therefore the decision to stop the production process was justified.

## Claims

1. Method for selecting a time-series data stream (4a-c) in a production plant, wherein a plurality of time-series data streams (4a-c) from respectively different data sources (5a-c) describe a production process variable (2) of a production process in the production plant, wherein for each time-series data stream (4a-c) from the plurality of time-series data streams (4a-c) a respective quality metric for describing the accuracy of the respective time-series data stream (4a-c) is determined, wherein each quality metric is determined based either on a numeric behavior test of the respective time-series data stream (4a-c) or based on system context information of the respective data source (5a-c), wherein from the plurality of time-series data streams (4a-c) a time-series data stream (4a-c) is selected based on the respective quality metric determined for each time-series data stream (4a-c).

2. Method according to claim 1, **characterized in that** a series of respective pluralities of time-series data streams (4a-c) from respectively different data sources (5a-c) describe a respective production process variable (2) of the production process in the production plant, wherein for each time-series data stream (4a-c) from each plurality of time-series data streams (4a-c) of the series a respective quality metric for describing the accuracy of the respective time-series data stream (4a-c) is determined, wherein each quality metric is determined based either on a numeric behavior test of the respective time-series data stream (4a-c) or based on system context information of the respective data source (5a-c), wherein from the plurality of time-series data streams (4a-c) a respective time-series data stream (4a-c) is selected for each plurality of time-series data streams (4a-c) of the series based on the respective quality metric determined for each time-series data stream (4a-c).

3. Method according to claim 1 or 2, **characterized in that**, at least for some time-series data streams (4a-c), the numeric behavior test comprises a freezing test to determine whether the deviation of the time-series data stream (4a-c), preferably within a predetermined length of time, exceeds a pre-determined minimal deviation threshold, in particular, that the numeric behavior test comprises a drifting test to determine whether a change of the average value of the time-series data stream (4a-c) exceeds a pre-determined drift threshold.

4. Method according to one of claims 1 to 3, **characterized in that**, at least for some time-series data streams (4a-c), the numeric behavior test comprises an out of range values test to determine whether the values of the time-series data stream (4a-c), preferably within a predetermined length of time, remain within a defined span, in particular, that the numeric behavior test comprises identifying each value of the time-series data stream (4a-c) as normal or abnormal based on an anomaly detection algorithm.

5. Method according to one of claims 1 to 4, **characterized in that**, at least for some time-series data streams (4a-c), the numeric behavior test comprises a noise variation test to determine whether a deviation of a current measured noise of the time series-data stream (4a-c) from a previous measured noise of the time series-data stream (4a-c) exceeds a predetermined noise deviation threshold.

6. Method according to one of claims 1 to 5, **characterized in that** at least one data source (5a-c) is a sensor device (3a-b) observing the production process variable, preferably, that a majority of the respective data sources (5a-c) of the plurality of time-series data streams (4a-c) are a respective sensor device (3a-b) observing the production process variable.

7. Method according to one of claims 1 to 6, **characterized in that** at least one data source (5a-c) is a computer model (8) of the production process variable.

8. Method according to one of claims 1 to 7, **characterized in that**, at least for some time-series data streams (4a-c), each quality metric is determined based on the numeric behavior test and on the system context information.

9. Method according to one of claims 1 to 8, **characterized in that**, at least for some time-series data streams (4a-c), the system context information comprises a running state of the production process, in particular a running state of the respective data source (5a-c).

10. Method according to one of claims 1 to 9, **characterized in that**, at least for some time-series data streams (4a-c), the system context information comprises system messages of the production process, in particular system messages of the respective data source (5a-c).

11. Method according to one of claims 1 to 10, **characterized in that**, at least for some time-series data streams (4a-c), the system context information comprises metadata describing a data accuracy, in particular a measurement accuracy, of the respective data source (5a-c).

12. Method according to one of claims 1 to 11, **characterized in that**, at least for some time-series data streams (4a-c), the system context information comprises historical data describing the accuracy of the respective data source (5a-c) for previous measurements.

13. Method according to one of claims 1 to 12, **characterized in that** for a subset of time-series data streams (4a-c) of the plurality of time-series data streams (4a-c) the quality metric is based on a plurality of numeric behavior tests, preferably, that the quality metric is determined based on a numerical weighing of each numeric behavior test of the plurality of numeric behavior tests to arrive at a combined numeric quality metric score.

14. Method according to one of claims 1 to 13, **characterized in that**, at least for some time-series data streams (4a-c), the system context information comprises at least one Boolean variable, preferably at least one Boolean variable for indicating a reliability of the respective data source (5a-c).

15. Method according to one of claims 1 to 14, **characterized in that** for a subset of time-series data streams (4a-c) of the plurality of time-series data streams (4a-c) the quality metric is based on a plurality of system context information, preferably, that the quality metric is determined based on a Boolean operation of each system context information of the plurality of system context information.

16. Method according to one of claims 1 to 15, **characterized in that** based on the selected time-series data stream (10) a process parameter of the production process is modified, preferably, that based on the selected time-series data stream (10) the production process is stopped.
